# EUROPEAN PATENT APPLICATION

(11) **EP 3 896 659 A1**
(43) Date of publication of application: **20.10.2021**
(21) Application number: 21164279.8
(22) Date of filing: 23.03.2021
(51) Int. Cl.: G06T 11/20, G06T 7/12

(54) **DATA THINNING METHOD, DATA THINNING APPARATUS, ELECTRONIC DEVICE, AND STORAGE MEDIUM**

(30) Priority: 28.08.2020 CN 202010884452
(71) Applicant: BEIJING BAIDU NETCOM SCIENCE AND TECHNOLOGY CO. LTD., 100085 Beijing (CN)
(72) Inventor: DONG, Jian, Beijing, 100085 (CN)
(74) Representative: Studio Torta S.p.A.

(57) **Abstract**

A data thinning method, a data thinning apparatus, an electronic device and a storage medium are provided, which are related to the field of map technologies. The data thinning method includes: performing a line segment segmentation on N spatial objects to obtain M first line segments, and determining a spatial relationship of the M first line segments, where the M first line segments traverse data of the N spatial objects, the M first line segments are not overlapped, N is an integer greater than or equal to 1, and M is an integer greater than 1; performing a data thinning on the M first line segments to obtain M second line segments; and combining the M second line segments, according to a correspondence between the M second line segments and the M first line segments and the spatial relationship, to obtain N thinned spatial objects. The spatial object after the thinning maintains the spatial relationship before the thinning, thereby avoid the gap or covering between the spatial objects after the thinning, and improving the thinning effect of the spatial data.

## Description

### TECHNICAL FIELD

The present disclosure relates to the field of map technologies, and in particular, to a data thinning method, a data thinning apparatus, an electronic device, and a storage medium.

### BACKGROUND

Data thinning is a data reduction method commonly used for spatial data. In general, spatial data generally has spatial relationships, and after the spatial data is thinned, the spatial relationships thereof may be destroyed. Taking a map application scenario as an example, after the spatial data of the map is thinned, a spatial relationship between spatial objects has an error, which may cause a gap or a cover to occur between the spatial objects. Therefore, in the related art, the thinning effect of the spatial data is poor.

### SUMMARY

A data thinning method, a data thinning apparatus, an electronic device, and a storage medium are provided in the present disclosure.

In a first aspect, a data thinning method is provided in the present disclosure, including:
performing a line segment segmentation on N spatial objects to obtain M first line segments, and determining a spatial relationship of the M first line segments, where the M first line segments traverse data of the N spatial objects, the M first line segments are not overlapped, N is an integer greater than or equal to 1, and M is an integer greater than 1;
performing a data thinning on the M first line segments to obtain M second line segments; and combining the M second line segments, according to a correspondence between the M second line segments and the M first line segments and the spatial relationship, to obtain N thinned spatial objects.

In a second aspect, a data thinning apparatus is provided in the present disclosure, including:
a segmenting module, configured to perform a line segment segmentation on N spatial objects to obtain M first line segments, where the M first line segments traverse data of the N spatial objects, the M first line segments are not overlapped, N is an integer greater than or equal to 1, and M is an integer greater than 1;
a determining module, configured to determine a spatial relationship of the M first line segments;
a first thinning module, configured to perform a data thinning on the M first line segments to obtain M second line segments; and
a combining module, configured to combine the M second line segments, according to a correspondence between the M second line segments and the M first line segments and the spatial relationship, to obtain N thinned spatial objects.

In a third aspect, an electronic device is provided in the present disclosure, including:
at least one processor; and
a memory communicatively coupled to the at least one processor; where
   the memory stores instructions executable by the at least one processor, the instructions are executed by the at least one processor, to enable the at least one processor to perform the data thinning method in the first aspect.

In a fourth aspect, a non-transitory computer readable storage medium storing computer instructions is provided in the present disclosure, where the computer instructions are configured to enable the computer to perform the data thinning method in the first aspect.

According to the present disclosure, a line segment segmentation is performed on the spatial objects, the spatial relationship of the line segments is determined, the line segments are combined according to the spatial relationship after the data thinning is performed on respective line segments, so that the thinned spatial objects still maintain the spatial relationship before the data thinning, thereby avoiding a gap or a covering between the thinned spatial objects, and improving the thinning effect of the spatial data.

It should be understood that the statements in this section are not intended to identify key or critical features of the embodiments of the present disclosure, nor are they intended to limit the scope of the present disclosure. Other features of the present disclosure will become apparent from the following description.

### BRIEF DESCRIPTION OF THE DRAWINGS

The drawings are to provide a better understanding of the present disclosure and are not to limit the present disclosure.
FIG. 1 is a schematic flow chart of a data thinning method according to a first embodiment of the present disclosure;
FIGS. 2-4 are examples of a data thinning method according to a first embodiment of the present disclosure;
FIG. 5 is a schematic view of a data thinning apparatus according to a second embodiment of the present disclosure; and
FIG. 6 is a block diagram of an electronic device to perform a data thinning method according to an embodiment of the present disclosure.

### DETAILED DESCRIPTION

The following description of the exemplary embodiments of the present disclosure, taken in conjunction with the accompanying drawings, includes various details of the embodiments of the application to assist in understanding, which are to be considered exemplary only. Accordingly, those of ordinary skill in the art will appreciate that various changes and modifications of the embodiments described herein may be made without departing from the scope of the present disclosure. In addition, descriptions of well-known functions and constructions are omitted in the following description for clarity and conciseness.

### First embodiment

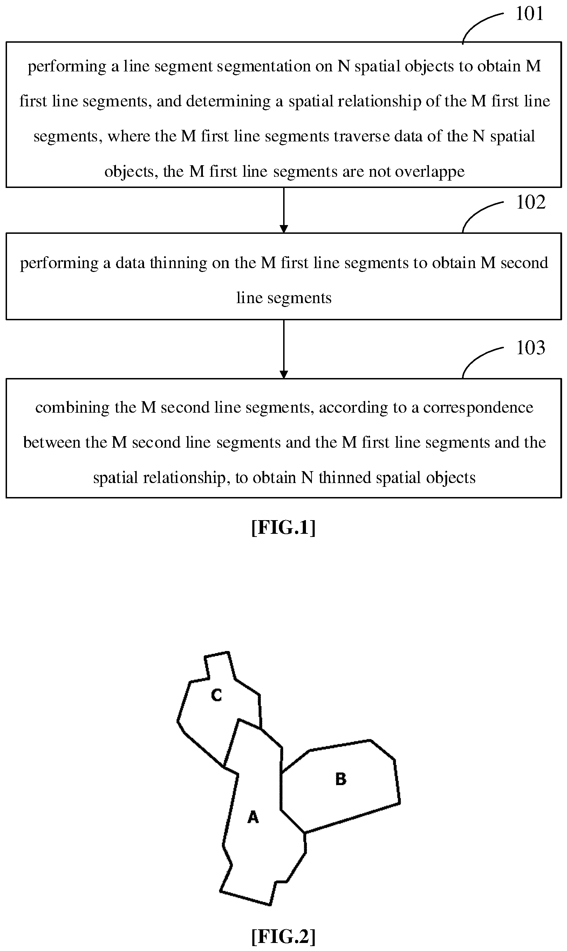

As shown in Fig. 1, the present disclosure provides a data thinning method, which includes the following steps:
Step 101: performing a line segment segmentation on N spatial objects to obtain M first line segments, and determining a spatial relationship of the M first line segments, where the M first line segments traverse data of the N spatial objects, the M first line segments are not overlapped, N is an integer greater than or equal to 1, and M is an integer greater than 1.

A spatial object may be understood as an object having a spatial property, a spatial relationship (or called spatial topological relationship) exists between the objects, for example, the objects are adjacent to each other, and the spatial object may be, for example, an object in a map or a base map of the map, such as an outline of a park, an outline of a community, an outline of a school in the base map, and the like.

The spatial object generally includes a plurality of objects, that is, the quantity of the objects is generally multiple, and when only a single object exists, since the single object does not have a spatial relationship with other objects, the single object may be thinned directly when the single object needs to be thinned.

In the related art, for a scene with a plurality of spatial objects, a method of performing a data thinning on each spatial object separately is usually adopted, and a spatial relationship among the spatial objects is ignored, for example, two adjacent spatial objects may cause a gap or a cover between the objects after the objects are thinned, so the spatial relationship between the objects is damaged.

In order to solve the above issues, the present disclosure provide a data thinning method considering spatial relationship. In the data thinning method according to the embodiment of the present disclosure, the executive body may be a data thinning apparatus, or a control module for executing the data thinning method in the data thinning apparatus. The data thinning apparatus may be an independent apparatus or may be a component, integrated circuit or chip in an electronic device. The data thinning apparatus may be mobile electronic equipment or non-mobile electronic equipment. The data thinning apparatus may be an apparatus having an operating system, and the operating system may be the Android operating system, an iOS operating system, or other possible operating systems, which is not specifically limited in the present disclosure.

In this step, the line segment segmentation is performed on N spatial objects to obtain M first segments. When performing the line segment segmentation, on one hand, the segmented line segment is required to traverse data of all the spatial objects, that is, the data of the spatial object is not omitted, so that all data of the spatial objects can participate in the subsequent thinning process, and the thinning effect of the spatial object may be improved; on the other hand, the segmented line segments are required to be not overlapped, the overlapping includes a partial overlapping and total overlapping, that is, the data of the spatial object is not overlapped, so that the data thinning amount may be reduced, the spatial relationship of the data may be ensured to be correct, and the issue that the spatial relationships before and after the thinning are inconsistent because a part of data of the spatial objects repeatedly participates in the thinning to generate different thinning results.

When the line segment segmentation is performed on the N spatial objects, if the above requirements are satisfied, specific line segment segmentation methods, for example, the segmented length of the segment, the segmented number of the segment, and the segmented position of the segment, may not be limited.

When the line segment segmentation is performed on the N spatial objects, the spatial relationship of the M first segments obtained by the line segment segmentation may also be determined, and the spatial relationship may be used to determine the spatial relationship between the segments or the spatial relationship between the segment and the spatial object, and the spatial relationship may not change before and after the thinning.

Step 102: performing a data thinning on the M first line segments to obtain M second line segments.

In this step, the data thinning may be performed on the M first segments obtained by the line segment segmentation, so as to obtain M second segments. When data thinning is performed on the line segment, the correspondence before and after the line segment thinning may be maintained, that is, a one-to-one correspondence exists between the M second line segments obtained after the M first line segments are thinned.

As described above, on one hand, the segmented line segment can traverse data of all the spatial objects, so that all data of the spatial objects may be ensured to participate in the thinning process, and the thinning effect of the spatial object may be improved; on the other hand, since the line segments obtained through the segmentation are not overlapped, the data of the spatial object may be prevented from repeatedly participating in the thinning process, and therefore the same data may be prevented from generating different thinning results in different thinning processes, the thinning data amount may be reduced, meanwhile, the spatial relation of the data may be guaranteed to be correct, and therefore the thinning effect of the spatial object may be improved.

Step 103: combining the M second line segments, according to a correspondence between the M second line segments and the M first line segments and the spatial relationship, to obtain N thinned spatial objects.

In this step, the M second line segments may be combined according to the correspondence between the M second line segments and the M first line segments and the spatial relationship, and the spatial object obtained by combining the M second line segments is the thinned spatial object, and the relationship between the spatial objects after the thinning is consistent with the relationship between the spatial objects before the thinning.

In the embodiment of the present disclosure, before data thinning is performed, the plurality of spatial objects are segmented into the plurality of line segments, and a data thinning is performed on the segmented line segments, and then the line segments are combined according to the correspondence after the thinning is completed to maintain the spatial object, and the topological relation of the spatial objects may be maintained while simplifying data for the spatial objects. Therefore, gaps or covering may be prevented from appearing between the spatial objects after the thinning, and the thinning effect of the spatial data is improved.

Optionally, the performing the line segment segmentation on the N spatial objects to obtain the M first line segments includes:
performing the line segment segmentation on the N spatial objects in terms of a public line segment and a non-public line segment to obtain the M first line segments, where the public line segment is a line segment shared by two adjacent spatial objects, and the non-public line segment is a line segment belonging to a single spatial object.

This embodiment provides a specific line segment segmentation method, as shown in Fig. 2, which includes A, B, C three spatial objects in Fig. 2, where A, B and C are adjacent to each other.

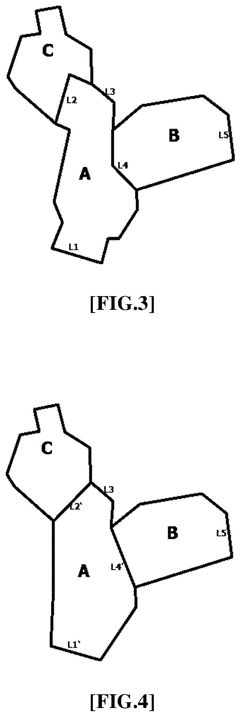

In this embodiment, the line segment segmentation is performed on the N spatial objects in terms of public line segment and non-public line segment, and thus, as shown in Fig. 3, spatial objects A and B may be segmented into L1 (L1 is a non-public line segment belonging to A), L2 (L2 is a public line segment shared by A and C), L3 (L3 is a non-public line segment belonging to A), L4 (L4 is a public line segment shared by A and B), and L5 (L5 is a non-public line segment belonging to B).

During the thinning, assuming that L1 'is obtained by thinning L1, L2' is obtained by thinning L2, L4 'is obtained by thinning L4, and L3 and L5 are not thinned, then the second segments obtained by the thinning are L1', L2 ', L3, L4' and L5. After the data thinning of the line segments is completed, the thinned line segments are combined into a spatial object according to the original spatial relationship (combination sequence) of the line segments, as shown in Fig. 4. It can be seen from Fig. 4, the spatial topological relationship between A and B is not changed after the thinning, and no gap or covering appears between adjacent objects after the thinning.

In the embodiment, the line segment segmentation is performed in terms of public line segment and non-public line segment, so that the segmentation method is simple, it may be ensured that the segmented line segments are not overlapped and the segmented line segments may traverse the data of all the spatial objects, and the segmented line segments have a definite spatial relationship attributes and the spatial relationship thereof has a higher identification degree.

Optionally, the determining the spatial relationship of the M first segments includes:
numbering the M first segments; and
determining a correspondence between numbers of the M first line segments and the N spatial objects, to take the correspondence as the spatial relationship of the M first line segments.

In this embodiment, when the line segment segmentation is performed on N spatial objects, the segmented line segments may be numbered, and a correspondence between the numbers and the N spatial objects may be recorded. Taking Fig. 3 as an example, spatial objects A and B are segmented into L1, L2, L3, L4 and L5, L1 to L5 are the numbers of M first line segments, L1 is a non-public line segment belonging to A, L2 is a public line segment shared by A and C, L3 is a non-public line segment belonging to A, L4 is a public line segment shared by A and B, and L5 is a non-public line segment belonging to B.

Correspondingly, the M second line segments obtained by thinning the M first line segments may also be numbered, for example, L1', L2', L4' and the like in Fig. 4 are the numbers of the second line segments.

In the embodiment, the line segments are numbered, and the spatial relationship of the line segments is embodied by the correspondence between the numbers and the spatial objects, so that the implementation mode is simple.

Optionally, the performing the data thinning on the M first line segments includes:
if a quantity of shape points of the first line segment is equal to 2, not performing a data thinning on the first line segment;
if a quantity of shape points of the first line segment is larger than 2, reserving two end points of the first line segment and thinning data between the two end points.

The line segment is formed by a plurality of discrete data points, the shape points of the line segment may be understood as the data points, when thinning the line segment, two end points of the line segment are reserved, and for the line segment with only two shape points (namely, only end points), the data thinning is not performed, so that the loss of the shape points is avoided.

Optionally, if the N spatial objects includes a first object and a second object, the first object is an object with an adjacent object, and the second object is an object without an adjacent object, the performing the line segment segmentation on the N spatial objects to obtain the M first line segments includes:
performing the line segment segmentation on a first object in the N spatial objects to obtain the M first line segments;
the method further includes:
   performing directly the data thinning on the second object in the N spatial objects.

In some scenarios, the N spatial objects to be thinned include not only objects with adjacent objects but also objects without adjacent objects, and for objects with adjacent objects, there is often a public line segment between adjacent objects, and when thinning the adjacent objects, it is necessary to avoid gaps or covering from forming in the adjacent objects. Therefore, it is necessary to perform a line segment segmentation on the objects with adjacent objects, and the subsequent processes such as line segment thinning and line segment combining are necessary to be performed on these objects. However, for objects without adjacent objects, the objects are independent objects, and there is no public line segment shared with other objects. In order to simplify the processing procedure and improve the thinning efficiency, these objects may be directly thinned without performing a line segment segmentation thereon.

It should be noted that, this embodiment does not exclude an implementation that a line segment segmentation is performed on the second objects, and a data thinning is performed on the line segments, and then the thinned line segments are combined.

According to the implementation mode, the method and the device may be compatible with various possible scenes, may further simplify the treatment process, and improve the thinning efficiency.

Optionally, the method further includes:
in the case that the N is equal to 1, performing directly the data thinning on the spatial object.

According to the embodiment of the present disclosure, for a scene with only one spatial object, in addition to performing a data thinning on the spatial object by using the above line segment segmentation thinning method, the data thinning may also be performed directly on the spatial object, so as to simplify the thinning process of a single spatial object and improve the thinning efficiency.

According to the embodiment of the present disclosure, one of the above methods may be selected according to specific conditions to perform the data thinning on a single spatial object to obtain a data thinning result. In addition, the two method above may be used to respectively perform the data thinning on the single spatial object to obtain two data thinning results, and the data thinning results obtained by different methods may be different, so the different data thinning results may be used to compare the difference between the two data thinning methods. It should be noted that, various embodiments in the data thinning method in the present disclosure may be implemented in combination with each other, or may be implemented separately, and the present disclosure is not limited thereto.

The above embodiments of the present disclosure have at least the following advantages or benefits:
According to the embodiment of the present disclosure, a line segment segmentation is performed on the spatial objects, the spatial relationship of the line segments is determined, the line segments are combined according to the spatial relationship after the data thinning is performed on respective line segments, so that the thinned spatial objects still maintain the spatial relationship before the data thinning, thereby avoiding a gap or a covering between the thinned spatial objects, and improving the thinning effect of the spatial data.

### Second embodiment

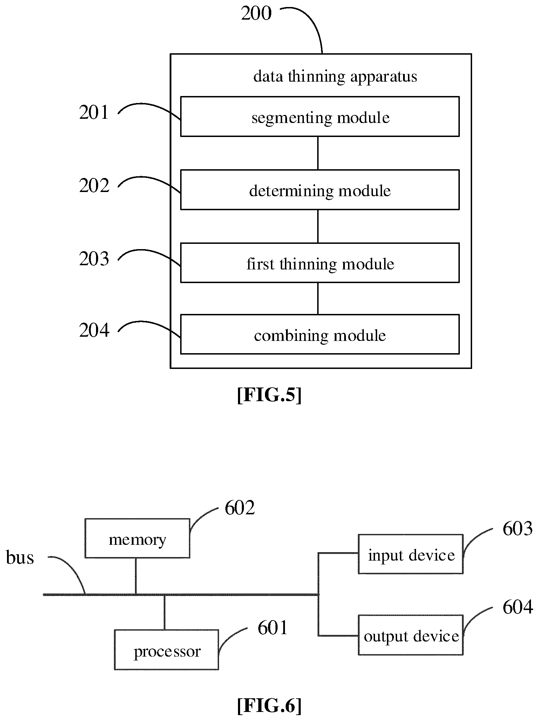

As shown in Fig. 5, a data thinning apparatus 200 is provided in the present disclosure, including:
a segmenting module 201, configured to perform a line segment segmentation on N spatial objects to obtain M first line segments, where the M first line segments traverse data of the N spatial objects, the M first line segments are not overlapped, N is an integer greater than or equal to 1, and M is an integer greater than 1;
a determining module 202, configured to determine a spatial relationship of the M first line segments;
a first thinning module 203, configured to perform a data thinning on the M first line segments to obtain M second line segments; and
a combining module 204, configured to combine the M second line segments, according to a correspondence between the M second line segments and the M first line segments and the spatial relationship, to obtain N thinned spatial objects.

Optionally, the segmenting module 201 is further configured to:
perform the line segment segmentation on the N spatial objects in terms of a public line segment and a non-public line segment to obtain the M first line segments, where the public line segment is a line segment shared by two adjacent spatial objects, and the non-public line segment is a line segment belonging to a single spatial object.

Optionally, the determining module 202 includes:
a numbering sub-module, configured to number the M first segments; and
a determining sub-module, configured to determine a correspondence between numbers of the M first line segments and the N spatial objects, to take the correspondence as the spatial relationship of the M first line segments.

Optionally, the first thinning module 203 is further configured to:
if a quantity of shape points of the first line segment is equal to 2, not perform a data thinning on the first line segment;
if a quantity of shape points of the first line segment is larger than 2, reserve two end points of the first line segment and thin data between the two end points.

Optionally, if the N spatial objects includes a first object and a second object, the first object is an object with an adjacent object, and the second object is an object without an adjacent object, the segmenting module 201 is further configured to:
perform the line segment segmentation on a first object in the N spatial objects to obtain the M first line segments;
the data thinning apparatus 200 further includes:
   a second thinning module, configured to perform directly the data thinning on the second object in the N spatial objects.

Optionally, the data thinning apparatus further includes:
a third thinning module, configured to, in the case that the N is equal to 1, perform directly the data thinning on the spatial object.

The data thinning apparatus 200 provided by the present disclosure can implement each process in the above data thinning method embodiments, and can achieve the same beneficial effects, and for avoiding repetition, it is not repeated here.

According to an embodiment of the present disclosure, an electronic device and a readable storage medium are also provided.

Fig. 6 is a block diagram of an electronic device according to an embodiment of the present disclosure. Electronic devices are intended to represent various forms of digital computers, such as laptops, desktops, workstations, personal digital assistants, servers, blade servers, mainframes, and other appropriate computers. Electronic devices may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementations of the applications described and/or claimed herein.

As shown in Fig. 6, the electronic apparatus includes: one or more processors 601, memory 602, and interfaces for connecting the various components, including high-speed interfaces and low-speed interfaces. The various components are interconnected using different buses and may be mounted on a common motherboard or in other manners as desired. The processor may process instructions for execution within the electronic device, including instructions stored in or on the memory to display graphical information of a GUI on an external input/output apparatus (such as a display device coupled to the interface). In other embodiments, multiple processors and/or multiple buses may be used, along with multiple memories and multiple memories, if desired. Also, multiple electronic devices may be connected, with each device providing some of the necessary operations (e.g., as an array of servers, a group of blade servers, or a multi-processor system). One processor 601 is illustrated in Fig. 6.

The memory 602 is a non-transitory computer readable storage medium as provided herein. The memory stores instructions executable by the at least one processor to enable the at least one processor to perform the data thinning method provided herein. The non-transitory computer readable storage medium of the present disclosure stores computer instructions for enabling a computer to perform the data thinning method provided herein.

The memory 602, which is a non-transitory computer-readable storage medium, may be used to store non-transitory software programs, non-transitory computer-executable programs, and modules, such as the program instructions/modules (e.g., the splitting module 201, the determining module 202, the first thinning module 203, and the combining module 204 shown in Fig. 5) corresponding to the data thinning method in the embodiments of the present disclosure. The processor 601 executes various functional applications and data processing of the data thinning apparatus by running non-transitory software programs, instructions and modules stored in the memory 602, that is, implements the data thinning method in the above method embodiments.

The memory 602 may include a storage program area and a storage data area, wherein the storage program area may store an operating system, an application program required for at least one function; the storage data area may store data created according to use of the electronic device of the data thinning method, and the like. Further, the memory 602 may include high speed random access memory, and may also include non-transitory memory, such as at least one magnetic disk storage device, flash memory device, or other non-transitory solid state storage device. In some embodiments, the memory 602 may optionally include memory remotely located from the processor 601, and such remote memory may be connected to the data thinning method electronics via a network. Examples of such networks include, but are not limited to, the internet, intranets, local area networks, mobile communication networks, and combinations thereof.

The electronic device of the data thinning method may further include: an input device 603 and an output device 604. The processor 601, the memory 602, the input device 603, and the output device 604 may be connected by a bus or other means, and are exemplified by being connected by a bus in Fig. 6.

The input device 603 may receive input numeric or character information and generate key signal inputs related to user settings and function control of the electronic device of the data thinning method, such as a touch screen, keypad, mouse, track pad, touch pad, pointing stick, one or more mouse buttons, track ball, joystick, etc. The output devices 604 may include a display device, auxiliary lighting devices (e.g., LEDs), and tactile feedback devices (e.g., vibrating motors), among others. The display device may include, but is not limited to, a Liquid Crystal Display (LCD), a Light Emitting Diode (LED) display, and a plasma display. In some implementations, the display device may be a touch screen.

Various implementations of the systems and techniques described here may be realized in digital electronic circuitry, integrated circuitry, application specific ASICs (application specific integrated circuits), computer hardware, firmware, software, and/or combinations thereof. These various embodiments may include: implemented in one or more computer programs that are executable and/or interpretable on a programmable system including at least one programmable processor, which may be special or general purpose, receiving data and instructions from, and transmitting data and instructions to, a storage system, at least one input device, and at least one output device.

These computer programs (also known as programs, software applications, or code) include machine instructions for a programmable processor, and may be implemented using high-level procedural and/or object-oriented programming languages, and/or assembly/machine languages. As used herein, the terms "machine-readable medium" and "computer-readable medium" refer to any computer program product, apparatus, and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having: a display device (e.g., a CRT (cathode ray tube) or LCD (liquid crystal display) monitor) for displaying information to a user; and a keyboard and a pointing device (e.g., a mouse or a trackball) by which a user may provide input to the computer. Other kinds of devices may also be used to provide for interaction with a user; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back-end component (e.g., as a data server), or that includes a middleware component (e.g., an application server), or that includes a front-end component (e.g., a user computer having a graphical user interface or a web browser through which a user can interact with an implementation of the systems and techniques described here), or any combination of such back-end, middleware, or front-end components. The components of the system may be interconnected by any form or medium of digital data communication (e.g., a communication network). Examples of communication networks include: local Area Networks (LANs), Wide Area Networks (WANs), the Internet, and blockchain networks.

The computer system may include clients and servers. A client and server are generally remote from each other and typically interact through a communication network. The relationship of client and server arises by virtue of computer programs running on the respective computers and having a client-server relationship to each other.

According to the present disclosure, a line segment segmentation is performed on the spatial objects, the spatial relationship of the line segments is determined, the line segments are combined according to the spatial relationship after the data thinning is performed on respective line segments, so that the thinned spatial objects still maintain the spatial relationship before the data thinning, thereby avoiding a gap or a covering between the thinned spatial objects, and improving the thinning effect of the spatial data.

It should be understood that various forms of the flows shown above, reordering, adding or deleting steps, may be used. For example, the steps described in the present disclosure may be executed in parallel, sequentially, or in different orders, and are not limited herein as long as the desired results of the technical solutions disclosed in the present disclosure may be achieved.

The above-described embodiments are not intended to limit the scope of the present disclosure. It should be understood by those skilled in the art that various modifications, combinations, sub-combinations and substitutions may be made, depending on design requirements and other factors. Any modification, equivalent replacement, and improvement made within the principle of the present disclosure shall be included in the scope of the present disclosure.

## Claims

1. A data thinning method, comprising:
performing a line segment segmentation on N spatial objects to obtain M first line segments, and determining a spatial relationship of the M first line segments, wherein the M first line segments traverse data of the N spatial objects, the M first line segments are not overlapped, N is an integer greater than or equal to 1, and M is an integer greater than 1;
performing a data thinning on the M first line segments to obtain M second line segments; and
combining the M second line segments, according to a correspondence between the M second line segments and the M first line segments and the spatial relationship, to obtain N thinned spatial objects.

2. The data thinning method according to claim 1, wherein the performing the line segment segmentation on the N spatial objects to obtain the M first line segments comprises:
performing the line segment segmentation on the N spatial objects in terms of a public line segment and a non-public line segment to obtain the M first line segments, wherein the public line segment is a line segment shared by two adjacent spatial objects, and the non-public line segment is a line segment belonging to a single spatial object.

3. The data thinning method according to claim 1, wherein the determining the spatial relationship of the M first segments comprises:
numbering the M first segments; and
determining a correspondence between numbers of the M first line segments and the N spatial objects, to take the correspondence as the spatial relationship of the M first line segments.

4. The data thinning method according to claim 1, wherein the performing the data thinning on the M first line segments comprises:
if a quantity of shape points of the first line segment is equal to 2, not performing a data thinning on the first line segment;
if a quantity of shape points of the first line segment is larger than 2, reserving two end points of the first line segment and thinning data between the two end points.

5. The data thinning method according to claim 1, wherein if the N spatial objects comprises a first object and a second object, the first object is an object with an adjacent object, and the second object is an object without an adjacent object, the performing the line segment segmentation on the N spatial objects to obtain the M first line segments comprises:
performing the line segment segmentation on a first object in the N spatial objects to obtain the M first line segments;
the method further comprises:
performing directly the data thinning on the second object in the N spatial objects.

6. The data thinning method according to claim 1, further comprising:
in the case that the N is equal to 1, performing directly the data thinning on the spatial object.

7. A data thinning apparatus, comprising:
a segmenting module, configured to perform a line segment segmentation on N spatial objects to obtain M first line segments, wherein the M first line segments traverse data of the N spatial objects, the M first line segments are not overlapped, N is an integer greater than or equal to 1, and M is an integer greater than 1;
a determining module, configured to determine a spatial relationship of the M first line segments;
a first thinning module, configured to perform a data thinning on the M first line segments to obtain M second line segments; and
a combining module, configured to combine the M second line segments, according to a correspondence between the M second line segments and the M first line segments and the spatial relationship, to obtain N thinned spatial objects.

8. The data thinning apparatus according to claim 7, wherein the segmenting module is further configured to:
perform the line segment segmentation on the N spatial objects in terms of a public line segment and a non-public line segment to obtain the M first line segments, wherein the public line segment is a line segment shared by two adjacent spatial objects, and the non-public line segment is a line segment belonging to a single spatial object.

9. The data thinning apparatus according to claim 7, wherein the determining module comprises:
a numbering sub-module, configured to number the M first segments; and
a determining sub-module, configured to determine a correspondence between numbers of the M first line segments and the N spatial objects, to take the correspondence as the spatial relationship of the M first line segments.

10. The data thinning apparatus according to claim 7, wherein the first thinning module is further configured to:
if a quantity of shape points of the first line segment is equal to 2, not perform a data thinning on the first line segment;
if a quantity of shape points of the first line segment is larger than 2, reserve two end points of the first line segment and thin data between the two end points.

11. The data thinning apparatus according to claim 7, wherein if the N spatial objects comprises a first object and a second object, the first object is an object with an adjacent object, and the second object is an object without an adjacent object, the segmenting module is further configured to:
perform the line segment segmentation on a first object in the N spatial objects to obtain the M first line segments;
the data thinning apparatus further comprises:
a second thinning module, configured to perform directly the data thinning on the second object in the N spatial objects.

12. The data thinning apparatus according to claim 7, further comprising:
a third thinning module, configured to, in the case that the N is equal to 1, perform directly the data thinning on the spatial object.

13. An electronic device, comprising:
at least one processor; and
a memory communicatively coupled to the at least one processor;
wherein the memory stores instructions executable by the at least one processor, the instructions are executed by the at least one processor, to enable the at least one processor to perform the data thinning method according to any one of claims 1 to 6.

14. A non-transitory computer readable storage medium storing computer instructions, wherein the computer instructions are configured to enable the computer to perform the data thinning method according to any one of claims 1 to 6.

15. A computer program product, comprising a computer program, wherein the computer program is configured to be executed by a processor, to implement the data thinning method according to any one of claims 1 to 6.
